Europäisches Patentamt

**European Patent Office**

**Office européen des brevets**

(11) Veröffentlichungsnummer : **0 014 968**
**B1**

(12) **EUROPÄISCHE PATENTSCHRIFT**

(45) Veröffentlichungstag der Patentschrift :
**26.01.83**

(21) Anmeldenummer : **80100762.6**

(22) Anmeldetag : **14.02.80**

(51) Int. Cl.³ : **H 04 L 25/40**, H 04 L 7/02,
H 04 B 12/02

(54) **Schaltungsanordnung zur Taktrückgewinnung in Regeneratoren für digitale Signale.**

(30) Priorität : **22.02.79 DE 2906969**

(43) Veröffentlichungstag der Anmeldung :
**03.09.80 Patentblatt 80/18**

(45) Bekanntmachung des Hinweises auf die Patenterteilung : **26.01.83 Patentblatt 83/04**

(84) Benannte Vertragsstaaten :
**AT BE CH DE FR GB IT LU NL SE**

(56) Entgegenhaltungen :
**AT B 346 392**
**DE A 2 501 494**

**K. TRÖNDLE, R. WEISS « Einführung in die Puls-Code-Modulation » 1974 R. OLDENBOURG VERLAG, München, Wien Seiten 142-148.**
**THE BELL SYSTEM TECHNICAL JOURNAL, Vol. 57, N° 6, July-August 1978, AMERICAN TELEPHONE AND TELEGRAPH COMPANY, T.L. MAOINE, D.D. SELL and D.H. WOHLAVER « Practical 45-Mb/s Regenerator for Lightwave Transmission », Seiten 1 837-1 856.**

(73) Patentinhaber : **SIEMENS AKTIENGESELLSCHAFT**
**Berlin und München Wittelsbacherplatz 2**
**D-8000 München 2 (DE)**

(72) Erfinder : **Dömer, Josef**
**Flossgatter 18**
**D-8021 Hohenschäftlarn (DE)**
Erfinder : **Kahn, Klaus-Dieter, Dipl.-Ing.**
**Klobensteinerstrasse 32**
**D-8000 München 90 (DE)**
Erfinder : **Thanhäuser, Gerhard, Dipl.-Ing.**
**Mozartstrasse 9**
**D-8905 Mering (DE)**

Schaltungsanordnung zur Taktrückgewinnung in Regeneratoren für digitale Signale

Die Erfindung betrifft eine Schaltungsanordnung zur Taktrückgewinnung in Regeneratoren für digitale Signale hoher Impulsfolgefrequenz mit einer, einen spannungsgesteuerten Oszillator und einen Phasendiskriminator enthaltenden Phasenregelschleife, die mit einem, an einen Entzerrer angeschlossenen Amplitudenentscheider verbunden ist und die eine vergleichsweise hohe Güte aufweist, und daß in die Verbindung zwischen Phasenregelschleife und Amplitudenentscheider ein auf die Taktfrequenz der digitalen Signale abgestimmter Schwingkreis vergleichsweise niedriger Güte eingeschaltet ist.

Übertragungsstrecken für digitale Signale, insbesondere für PCM-Signale, enthalten in bestimmten Abständen in die Strecke eingesetzte Zwischenregeneratoren, in denen das übertragene digitale Signal hinsichtlich Amplitude und Form der Impulse regeneriert wird. Zur zeitmäßigen Regenerierung dienen dabei besondere Zeitentscheiderstufen, denen ein Taktsignal zugeführt werden muß. Das Taktsignal wird in üblicher Weise aus den empfangenen digitalen Signalen entweder mittels einer einen Phasendiskriminator und einen spannungsgesteuerten Oszillator enthaltenden Phasenregelschleife oder mittels eines auf die Taktfrequenz der digitalen Signale abgestimmten Schwingkreises, eines sogenannten Schwungradkreises gewonnen. Derartige Schwungradkreise haben den Vorteil eines vergleichsweise niedrigen Aufwandes, während Phasenregelschleifen als aktive Elemente unmittelbar nach dem Einschalten der Übertragungsstrecke und unabhängig vom Empfang eines Übertragungssignals schon ein Taktsignal erzeugen und deshalb beispielsweise nach Übertragungsstörungen eine wesentlich kleinere Synchronisierzeit benötigen. Besonders günstig sind in diesem Fall Phasenregelschleifen, die einen spannungsgesteuerten Quarzoszillator enthalten.

Bei Taktrückgewinnungsschaltungen für derartige PCM-Regeneratoren besteht das Problem, daß die digitalen Signale in einem Code auftreten können, bei dem mehrere unmittelbar aufeinanderfolgende unipolare Impulse möglich sind, ein derartiger Code ist beispielsweise der 4B3T-Code. In diesem Falle kann für mehrere auf-einanderfolgende Taktperioden die Taktinformation ausbleiben und dadurch die Erzeugung des Taktsignales bei Verwendung eines Schwungkreises gestört werden, bei Verwendung einer Phasenregelschleife kann sich eine Verstimmung dieser Phasenregelschleife ergeben, die beim Wiederauftauchen der Taktinformation zu Phasensprüngen führt.

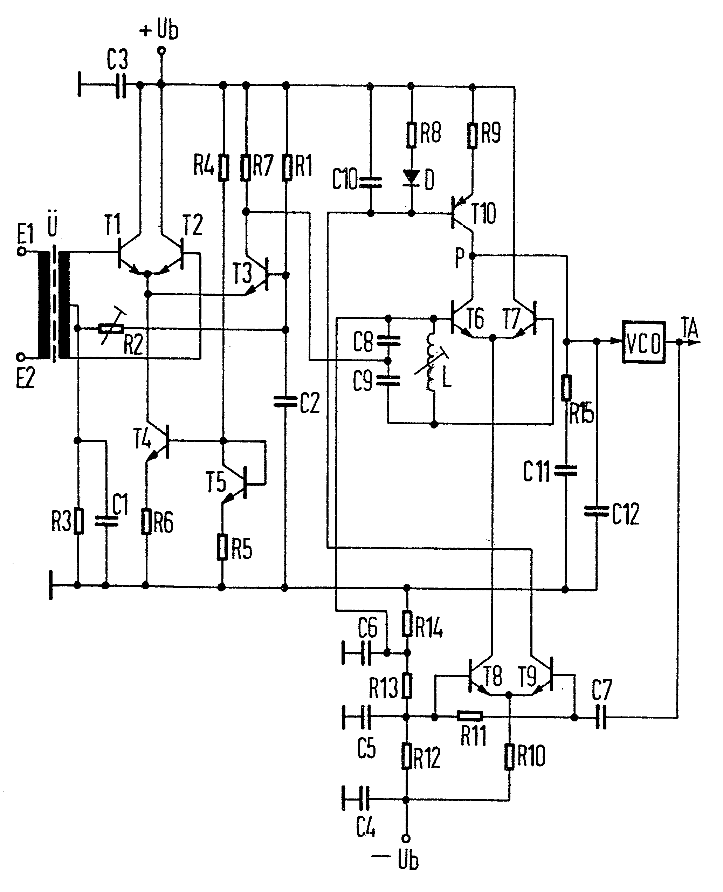

Diese Phasenschwankungen treten in geringerem Maße auf in einer Schaltungsanordnung, die aus der DE-A1-2 501 494, insbesondere deren Fig. 4, bekannt ist. Dies ist eine Schaltungsanordnung zur Taktrückgewinnung in Regeneratoren für digitale Signale hoher Impulsfolgefrequenz mit einer Phasenregelschleife bekannt, die mit einem, an einen Entzerrer angeschlossenen Amplitudenentscheider verbunden ist und die einen spannungsgesteuerten Oszillator und einen Phasendiskriminator enthält. In die Verbindung zwischen Amplitudenentscheider und Phasenregelschleife ist ein auf die Taktfrequenz der digitalen Signale abgestimmter Schwingkreis vergleichsweise niedriger Güte eingefügt.

Aufgabe der Erfindung ist es, eine zweckmäßige, kompakte Schaltungsanordnung dieser Gattung unzugeben.

Erfindungsgemäß wird die Aufgabe dadurch gelöst, daß der Phasendiskriminator in an sich bekannter Weise durch die Kaskadenschaltung einer festen und einer veränderlichen Stromquelle gebildet wird und dabei die veränderliche Stromquelle zwei in Kaskade geschaltete Differenzverstärker enthält, von denen der eine durch die Ausgangsspannung des spannungsgesteuerten Oszillators und der andere durch die am Schwingkreis auftretenden Spannungen gesteuert ist und der Steuereingang des spannungsgesteuerten Oszillators am Verbindungspunkt der festen und der veränderlichen Stromquelle angeschlossen ist und daß die feste Stromquelle mit dem durch das Ausgangssignal des spannungsgesteuerten Oszillators gesteuerten Differenzverstärker, der nicht zur Kaskadenbildung verwendet wird, nach Art einer Stromspiegelschaltung verbunden ist.

Dadurch ist sichergestellt, daß auch beim Auftreten von mehr als 1 000 aufeinanderfolgenden Taktzeiten ohne Taktinformation die Phase des spannungsgesteuerten Oszillators nicht unzulässig verschoben wird.

Aus der Veröffentlichung « The Bell System Technical Journal » Nr. 6, vom Juli/August 1978, Seiten 1837 bis 1856 ist an sich ein Phasendiskriminator bekannt, der durch die Kaskadenschaltung eines festen Widerstandes und einer veränderlichen Stromquelle gebildet wird und bei dem die veränderliche Stromquelle zwei in Kaskade geschaltete Differenzverstärker enthält. Der eine der beiden Differenzverstärker wird dabei durch die Ausgangsspannung eines spannungsgesteuerten Oszillators und der andere durch die aus dem Empfangssignal gewonnene Taktinformation gesteuert. Der Steuereingang des spannungsgesteuerten Oszillators der Phasenregelschleife ist dabei am Verbindungspunkt des festen Widerstandes und der veränderlichen Stromquelle angeschlossen.

Günstige Ausbildungen der erfindungsgemäßen Schaltungsanordnung sind in den Ansprüchen 2 und 3 näher beschrieben.

Die Erfindung soll im folgenden anhand der Zeichnung näher erläutert werden. In der Zeichnung zeigt die einzige Figur eine Taktrückgewinnungsschaltung nach der Erfindung für einen PCM-Regenerator.

In der Figur sind mit E1, E2 die beiden Eingänge der Schaltungsanordnung bezeichnet, die beispielsweise an den Entzerrerausgang des PCM-Regenerators angeschlossen sein können, es ist auch ein Anschluß an den Amplitudentscheider des PCM-Regenerators möglich.

Im vorliegenden Falle wurde zusätzlich zum Amplitudenentscheider des Regenerators ein weiterer Amplitudenentscheider verwendet, der zwar ähnlich dem Amplitudenentscheider des Regenerators aufgebaut ist, dessen Arbeitspunkt jedoch anders eingestellt ist. Von den beiden Eingangsanschlüssen gelangen die ternären oder pseudoternären Signale über den Übertrager E zu dessen Sekundärwicklung, die beiden äußeren Anschlüsse der Sekundärwicklung sind mit den Basisanschlüssen eines ersten bzw. zweiten Transistors T1, T2 verbunden, deren Emitteranschlüsse miteinander nach Art eines Differenzverstärkers verbunden sind. Diese Emitteranschlüsse sind außerdem mit dem Emitteranschluß eines dritten npn-Transistors T3 und mit dem Kollektoranschluß eines vierten npn-Transistors T4 verbunden. Den Differenzverstärkertransistoren T1 und T2 wird in bekannter Weise die benötigte Basisvorspannung über eine Mittelanzapfung der Sekundärwicklung zugeführt. Dazu ist mit dem positiven Betriebsspannungsanschluß + Ub ein erster Widerstand R1 verbunden, dessen anderer Anschluß ist mit dem Basisanschluß des dritten Transistors T3, über einen zweiten Kondensator C2 mit Masse und über einen einstellbaren Widerstand R2 mit dem Mittelanschluß der Sekundärwicklung des Eingangsübertragers Ü und außerdem über einen ersten Kondensator C1 und einen dritten Widerstand R3 mit Masse verbunden.

Durch den zweiten Widerstand R2 kann die Vorspannung für die Differenzverstärkertransistoren T1 und T2 so eingestellt werden, daß sich die Entscheiderschwelle für diesen Amplitudenentscheider im oberen Teil des Auges des PCM-Signals befindet und sich dadurch eine maximale Taktinformation ergibt. Diese Taktinformation wird vom Kollektoranschluß des Transistors T3 abgenommen und dem Phasendiskriminator der Phasenregelschleife zugeführt. Der Kollektoranschluß dieses Transistors ist außerdem über einen siebenten Widerstand R7 mit dem positiven Betriebsspannungsanschluß + Ub verbunden. Der Emitterstrom für den ersten Differenzverstärker wird durch eine mittels des Transistors T4 gebildete Stromquelle festgelegt, die einen mit der positiven Betriebsspannung verbundenen vierten Widerstand R4 enthält, an den der Basisanschluß des vierten npn-Transistors T4 und eines fünften npn-Transistors T5 und der Kollektoranschluß dieses Transistors angeschlossen sind. Der Emitteranschluß des fünften Transistors T5 ist dabei außerdem über einen fünften Widerstand R5 mit Masse und der Emitteranschluß des vierten Transistors T4 ist über einen sechsten Widerstand R6 mit Masse verbunden.

Von den Transistoren T1, T2 oder T3 ist jeweils der Transistor eingeschaltet, an dessen Basis die positivste Vorspannung liegt. Dies ist nach dem Einschalten der Transistor T3, während die Transistoren T1 und T2 gesperrt sind. Mit dem Eintreffen von PCM-Signalen wird entweder der Transistor T1 oder der Transistor T2 geöffnet und der Transistor T3 gesperrt. Über den Kollektoranschluß des Transistors T3 fließt damit ein vom Bitmuster unmittelbar abhängiger nahezu rechteckförmiger Strom mit einer Amplitude, die dem vom Stromquellentransistor T4 eingeprägten Strom entspricht. Die Transistoren T4 und T5 bilden dabei zusammen mit den angeschlossenen Widerständen eine temperaturkompensierte Stromquelle.

Mit dem Ausgang des Amplitudenentscheiders ist der Eingang der Phasenregelschleife verbunden, der durch den einen Vergleichssignaleingang des Phasendiskriminators gebildet wird. Mit diesem Eingang sind die Anschlüsse eines achten und eines neunten Kondensators C8, C9 verbunden, deren andere Anschlüsse über eine abgleichbare Induktivität L miteinander und außerdem jeweils getrennt mit den Basisanschlüssen eines sechsten bzw. eines siebenten Transistors T6, T7 verbunden sind. Der Basisanschluß des sechsten Transistors ist außerdem noch mit dem Anschluß eines Spannungsteilers verbunden, der die negative Betriebsspannung − Ub auf die für die Transistoren T6, T7 bzw. T8, T9 benötigte Basisvorspannung herabsetzt. Die Emitteranschlüsse der beiden Transistoren T6 und T7 sind miteinander verbunden, so daß sich ein Differenzverstärker ergibt. Außerdem sind diese Emitteranschlüsse mit dem Kollektoranschluß eines achten npn-Transistors T8 verbunden, der zusammen mit einem neunten npn-Transistor T9 einen weiteren Differenzverstärker bildet. Die Emitteranschlüsse der Transistoren T8 und T9 sind über den zehnten Widerstand R10 mit der negativen Betriebsspannung − Ub verbunden.

Der Basisanschluß des achten Transistors T8 ist direkt an einen Anschluß des mit der negativen Betriebsspannung verbundenen Basisspannungsteilers angeschlossen, der Basisanschluß des Transistors T9 ist über einen elften Widerstand R11 mit dem Basisanschluß des achten Transistors T8 und außerdem über einen siebenten Kondensator C7 mit dem Ausgangsanschluß des spannungsgesteuerten Oszillators VCO verbunden.

Der Kollektoranschluß des neunten Transistors T9 ist über den zehnten Kondensator C10 und die Reihenschaltung aus einer Diode D und einem achten Widerstand R8 an die positive Betriebsspannung + Ub angeschlossen, außerdem ist er mit dem Basisanschluß eines zehnten Transistors T10 vom pnp-Typ verbunden. Der Emitteranschluß dieses Transistors ist über einen neunten Widerstand R9 mit der positiven Betriebsspannung + Ub verbunden, während der Kollektoranschluß dieses Transistors mit dem Kollektoranschluß des sechsten npn-Transistors T6 am Verbindungspunkt P zusammengeführt ist. An diesen Verbindungspunkt ist außerdem ein RC-Netzwerk zur Speicherung der Steuerspannung für den spannungsgesteuerten Oszillator angeschlossen, das eine mit Masse verbundene Reihenschaltung aus einem fünfzehnten Widerstand R15 und einem elften Kondensator C11 und außerdem einen mit Masse verbundenen Kondensator C12 enthält. An dem Verbindungspunkt P entsteht das Steuersignal für den spannungsgesteuerten Oszillator, das diesem über den angeschlossenen Steuereingang zugeführt wird.

Die mit dem Amplitudenentscheider verbundene Taktrückgewinnungsschaltung enthält somit als wesentliche Bauteile den auf die Impulsfolgefrequenz der digitalen Signale abgestimmten Schwingkreis, der als Schwungradkreis wirkt, und eine Kaskadenschaltung aus einer festen Stromquelle, die durch den Transistor T10, die Diode D und die Widerstände R8 und R9 gebildet wird und einer variablen Stromquelle. Diese variable Stromquelle wird durch zwei in Kaskade geschaltete Differenzverstärker gebildet, wobei der eine Differenzverstärker mit den Transistoren T6 und T7 durch die Schwingkreisspannung umgeschaltet wird, während der andere Differenzverstärker durch das Ausgangssignal des spannungsgesteuerten Oszillators VCO umgeschaltet wird.

Die Güte des Schwingkreises ist so gering dimensioniert, daß er mit Sicherheit gerade noch die im Code vorhandenen taktinformationslosen Zeiten überbrücken kann, daß also nach diesen Zeiten die Schwingspannung noch für das Durchschalten der Transistoren T6 und T7 ausreicht. Es ergibt sich hier eine typische Güte von etwa 20 beim Ausführungsbeispiel. Durch die Verwendung eines derartigen Schwingkreises mit niedriger Güte wird der Phasenjitter des vom Amplitudenentscheider abgegebenen Taktsignals so weit reduziert, daß der Proportionalitätsbereich des angeschlossenen Phasendiskriminators nicht überschritten wird. Durch das Ausgangssignal des spannungsgesteuerten Oszillators werden die Transistoren T8 bzw. T9 jeweils umgeschaltet, wobei der Wert des Widerstandes R11 so groß gewählt ist, daß die Transistoren T8 und T9 symmetrisch umgeschaltet werden. Dieser praktisch reckteckförmige Kollektorstrom des Transistors T8 fließt durch den aus den Transistoren T6 und T7 gebildeten Differenzverstärker, wobei es dort in Abhängigkeit von der Spannung am Schwingkreis zu einer weiteren symmetrischen Umschaltung kommt. Der entstehende Gleichstrommittelwert des Kollektorstroms des Transistors T6 ist dadurch von der Phasenlage zwischen der Schwingkreisspannung und der Ausgangsspannung des spannungsgesteuerten Oszillators abhängig. Der Zusammenhang zwischen Phasendifferenz dieser Spannungen und dem Gleichstrommittelwert ist annähernd dreiecksförmig mit der Periode von 360°.

Die Mitte des Proportionalbereichs des Phasendiskriminators wird dabei erreicht, wenn das vom Schwingkreis abgegebene PCM-Signal 90° nach der ansteigenden Flanke des vom spannungsgesteuerten Oszillator erzeugten Taktes auftritt. Damit bei dieser Phasenlage der resultierende Ausgangsstrom des Phasendiskriminators zu Null wird und dadurch keine weitere Verstimmung des spannungsgesteuerten Oszillators entsteht, muß der zehnte Transistor T10 ein Viertel des durch den zehnten Widerstand R10 fließenden Stromes liefern. Aus diesem Grunde ist der zehnte Transistor T10 in Stromspiegelschaltung zu den Transistoren T9 und T8 angeordnet. Dadurch wird der vom Bitmuster und von der Phasenlage unabhängige Gleichstrommittelwert des Transistors T9 durch die Stromspiegelschaltung mit dem Transistor T10 mit dem Faktor 0,5 multipliziert.

Bei Ausfall der digitalen Signale verschwindet die Schwingkreisspannung, der Kollektorstrom des Transistors T8 fließt dann zu gleichen Teilen durch die Transistoren T6 und T7. Der Ausgangsstrom vom Verbindungspunkt P zum spannungsgesteuerten Oszillator wird dadurch zu Null, die Phasenlage des Oszillators wird nur noch die in dem Tiefpaß aus dem Widerstand R15, dem Kondensator C11 und dem Kondensator C12 gespeicherte Ladung bestimmt. Da der Steuereingang des spannungsgesteuerten Oszillators recht hochohmig ist, bleibt diese Ladung für vergleichsweise lange Zeit, also über wenigstens 1 000 Taktzeiten unverändert.

**Ansprüche**

1. Schaltungsanordnung zur Taktrückgewinnung in Regeneratoren für digitale Signale hoher Impulsfolgefrequenz mit einer, einen spannungsgesteuerten Oszillator (VCO) und einen Phasendiskriminator (T8-T10) enthaltenden Phasenregelschleife, die mit einem, an einen Entzerrer angeschlossenen Amplitudenentscheider (T1-T3) verbunden ist und die eine vergleichsweise hohe Güte aufweist, und daß in die Verbindung zwischen Phasenregelschleife und Amplitudenentscheider ein auf die Taktfrequenz der digitalen Signale abgestimmter Schwingkreis (L, C8, C9) vergleichsweise niedriger Güte eingeschaltet ist, dadurch gekennzeichnet, daß der Phasendiskriminator in an sich bekannter Weise durch die Kaskadenschaltung einer festen (T10) und einer veränderlichen Stromquelle gebildet wird und dabei die veränderliche Stromquelle zwei in Kaskade geschaltete Differenzverstärker (T6, T7 ; T8, T9) enthält, von denen der eine durch die Ausgangsspannung des spannungsgesteuerten Oszillators (VCO) und der andere durch die am Schwingkreis (L, C8, C9) auftretenden Spannungen gesteuert ist und der Steuereingang (P) des spannungsgesteuerten Oszillators (VCO) am Verbindungspunkt (P) der festen und der veränderlichen Stromquelle angeschlossen ist und daß die feste Stromquelle (T10) mit dem durch das Ausgangssignal (TA) des spannungsgesteuerten Oszillators (VCO) gesteuerten Teil (T9) der Differenzverstärkers (T8, T9), der nicht zur Kaskadenbildung verwendet wird, nach Art einer Stromspiegelschaltung verbunden ist.

2. Schaltungsanordnung nach Anspruch 1, dadurch gekennzeichnet, daß mit dem Ausgangsanschluß des Amplitudenentscheiders der eine Anschluß eines achten und eines neunten Kondensators (C8, C9) verbunden sind, deren andere Anschlüsse über eine Induktivität (L) miteinander verbunden und außerdem jeweils getrennt mit den Basisanschlüssen eines sechsten und eines siebenten npn-Transistors (T6, T7) verbunden sind, daß der Basisanschluß des sechsten Transistors außerdem mit einem Spannungsteiler für die negative Betriebsspannung (− Ub) verbunden ist, daß die Emitteranschlüsse des sechsten und des siebenten Transistors miteinander und mit dem Kollektoranschluß eines achten npn-Transistors (T8) verbunden sind, daß der Emitteranschluß des achten Transistors (T8) mit dem Emitteranschluß des neunten npn-Transistors (T9) und über einen zehnten Widerstand (R10) mit der negativen Betriebsspannung (− Ub) verbunden ist, daß der Basisanschluß des achten Transistors (T8) mit einem Anschluß des Spannungsteilers für die negative Betriebsspannung und außerdem über einen für die symmetrische Umschaltung des achten und des neunten Transistors (T8, T9) bemessenen elften Widerstand (R11) mit dem Basisanschluß des neunten npn-Transistors (T9) verbunden ist, der über einen siebenten Kondensator (C7) mit dem Ausgangsanschluß des spannungsgesteuerten Oszillators (VCO) verbunden ist, daß der Kollektoranschluß des neunten Transistors (T9) über einen zehnten Kondensator (C10) und außerdem über eine Reihenschaltung aus einer Diode (D) und einem achten Widerstand (R8) mit der positiven Betriebsspannung (+ Ub) und außerdem mit dem Basisanschluß eines zehnten Transistors (T10) vom pnp-Typ verbunden ist, daß der Emitteranschluß dieses Transistors über einen neunten Widerstand (R9) mit der positiven Betriebsspannung verbunden ist, daß der Kollektoranschluß dieses Transistors am Verbindungspunkt (P) mit dem Kollektoranschluß des sechsten Transistors (T6) und außerdem über die Reihenschaltung eines elften Kondensators (C11) und eines fünfzehnten Widerstandes (R15) sowie über einen zwölften Kondensator (C12) mit Masse verbunden ist, daß der Kollektoranschluß des zehnten Transistors außerdem mit dem Steuereingang des spannungsgesteuerten Oszillators (VCO) und daß dessen Ausgangsanschluß mit dem Taktausgang verbunden ist.

3. Schaltungsanordnung nach Anspruch 1, dadurch gekennzeichnet, daß der zur Taktrückgewinnung bei der Übertragung ternärer und pseudoternärer Signale der Phasenregelschleife vorgeschaltete Amplitudenentscheider einen ersten aus zwei npn-Transistoren (T1, T2) gebildeten Differenzverstärker enthält, bei dem die Emitteranschlüsse der beiden Transistoren miteinander, mit dem Emitteranschluß eines dritten npn-Transistors (T3) und dem Kollektoranschluß eines vierten npn-Transistors (T4) verbunden sind, bei dem die Kollektoranschlüsse der beiden ersten Transistoren (T1, T2) mit der Betriebsspannung (+ Ub) verbunden sind, bei dem die Basisanschlüsse der beiden ersten Transistoren jeweils getrennt mit den äußeren Anschlüssen einer mittelangezapften Sekundärwicklung eines Übertragers (Ü) verbunden sind, bei dem der Basisanschluß des dritten Transistors (T3) über einen ersten Widerstand (R1) mit der positiven Betriebsspannung (+ Ub), über einen veränderlichen zweiten Widerstand (R2) mit der Mittelanzapfung der Sekundärwicklung und mit dem einen Anschluß eines ersten Kondensators (C1) und eines dritten Widerstandes (R3) verbunden ist, deren andere Anschlüsse mit Masse verbunden sind, daß der Basisanschluß des dritten Transistors außerdem über einen zweiten Kondensator (C2) mit Masse verbunden ist, daß der Basisanschluß des vierten Transistors (T4) mit dem Kollektoranschluß und dem Basisanschluß eines fünften Transistors (T5) und über einen vierten Widerstand (R4) mit der positiven Betriebsspannung (+ Ub) verbunden ist, daß der Emitteranschluß des fünften npn-Transistors (T5) über einen fünften Widerstand mit Masse und der Emitteranschluß des vierten Transistors (T4) über einen sechsten Widerstand (R6) mit Masse verbunden sind und daß der Kollektoranschluß des dritten Transistors (T3) über einen siebenten Widerstand (R7) mit der positiven Betriebsspannung (+ Ub) und außerdem mit dem Ausgangsanschluß des Amplitudenentscheiders verbunden ist.

**Claims**

1. A circuit arrangement for the clock pulse production in re-generators for digital signals of high pulse repetition frequency, comprising a relatively high quality factor phase control loop which contains a voltagecontrolled oscillator (VCO) and a phase discriminator (T8-T10) and which is connected to an amplitude selector (T1-T3) linked to a distortion corrector, and an oscillating circuit having a relatively low quality factor (L, C8, C9), tuned to the clock pulse frequency of the digital signals and inserted into the connection between the phase control loop and the amplitude selector, characterised in that the phase discriminator is formed by the cascade connection of a fixed (T10) and a variable current source in a manner which is known *per se,* the variable current source comprises two difference amplifiers (T6, T7 ; T8, T9) which are connected in cascade, of which one is controlled by the output voltage of the voltage-controlled oscillator (VCO) and the other is controlled by the voltages occurring at the oscillating circuit (L, C8, C9), the control input of the voltage-controlled oscillator (VCO) is connected to the connection point (P) of the fixed and the variable current source, and the fixed current source (T10) is connected to the component (T9) of the different amplifier (T, T9) which is controlled by the output signal (TA) of the voltage-controlled oscillator (VCO) and which is not used for the cascade formation, on the lines of a current reflector circuit.

2. A circuit arrangement as claimed in Claim 1, characterised in that one terminal of an eighth and a ninth capacitor (C8, C9) is connected to the output terminal of the amplitude selector and their other terminals are connected together via an inductor (L) and separately to the base terminals of a sixth and seventh npn-transistor (T6, T7), the base terminal of the sixth transistor is further connected to a voltage divider for the negative operating voltage (– Ub), the emitter terminals of the sixth and seventh transistor are connected to one another and to the collector terminal of an eighth npn-transistor (T8), the emitter terminal of the eighth transistor (T8) is connected to the emitter terminal of the ninth npn-transistor (T9) and via a tenth resistor (R10) to the negative operating voltage (– Ub), the base terminal of the eighth transistor (T8) is connected to a terminal of the voltage divider for the negative operating voltage and also via an eleventh resistor (R11), dimensioned for the symmetric change-over of the eighth and ninth transistor (T8, T9), to the base terminal of the ninth npn-transistor (T9) which is connected via a seventh capacitor (C7) to the output terminal of the voltage-controlled oscillator (VCO), the collector terminal of the ninth transistor (T9) is linked via a tenth capacitor (C10) and also via a series connection consisting of a diode (D) and an eighth resistor (R8) to the positive operating voltage (+ Ub) and also to the base terminal of a tenth transistor (T10) of the pnp type, the emitter terminal of this transistor is connected via a ninth resistor (R9) to the positive operating voltage, the collector terminal of this transistor is connected to the collector terminal of the sixth transistor (T6) and also to earth via the series connection of an eleventh capacitor (C11) and of a fifteenth resistor (R15) and via a twelth capacitor (C12), the collector terminal of the tenth resistor is connected to the control input of the voltage-controlled oscillator (VCO), and that the output terminal thereof is connected to the clock pulse output.

3. A circuit arrangement as claimed in Claim 1, characterised in that the amplitude selector, which is connected preceding the phase control loop in order to receive the clock pulses in the transmission of ternary and pseudo-ternary signals, comprises a first difference amplifier formed from two npn transistors (T1, T2) in which difference amplifier the emitter terminals of the two transistors are connected to one another, to the emitter terminal of a third npn transistor (T3) and to the collector terminal of a fourth npn transistor (T4), the collector terminals of the two first transistors (T1, T2) are linked to the operating voltage (+ Ub), the base terminals of the two first transistors are each separately connected to the outer terminals of a centre tapped secondary winding of a transmitter (Ü), the base terminal of the third transistor (T3) is connected via a first resistor (R1) to the positive operating voltage (+ Ub), via a variable second resistor (R2) to the centre tapping of the secondary winding and to the one terminal of a first capacitor (C1) and of a third resistor (R3) whose other terminals are connected to earth, the base terminal of the third transistor is further connected via a second capacitor (C2) to earth, the base terminal of the fourth transistor (T4) is connected to the collector terminal and the base terminal of a fifth transistor (T5) and via a fourth resistor (R4) to the positive operating voltage (+ Ub), the emitter terminal of the fifth npn-transistor (T5) is connected via a fifth resistor to earth and the emitter terminal of the fourth transistor (T4) is connected via a sixth resistor (R6) to earth, and that the collector terminal of the third transistor (T3) is connected via a seventh resistor (R7) to the positive operating voltage (+ Ub) and also to the output terminal of the amplitude selector.

**Revendications**

1. Montage pour la récupération du rythme dans des générateurs pour des signaux numériques à fréquence de répétition importante des impulsions, comportant une boucle de régulation de la phase contenant un oscillateur (VCO) commandé par la tension et un discriminateur de phase (T8-T10), boucle qui est reliée à un discriminateur d'amplitude (T1-T3) relié à un dispositif de correction de la distorsion et qui possède un facteur de qualité relativement élevée, et que se trouve inséré, dans la liaison entre la boucle de régulation de la phase et le discriminateur d'amplitude, un circuit oscillant (L, C8, C9) accordé à la fréquence du rythme des signaux numériques et possédant un facteur de qualité relativement bas, caractérisé par le fait que le discriminateur de phase est constitué, de façon connue en soi, par le montage en cascade d'une source de courant fixe (T10) et d'une source de courant variable, la source de courant variable comportant deux amplificateurs différentiels (T6, T7 ; T8, T9) qui sont montés en cascade et dont l'un est commandé par la tension de sortie de l'oscillateur (VCO) commandé en tension et l'autre par les tensions qui apparaissent aux bornes du circuit oscillant (L, C8, C9), alors que l'entrée de commande de l'oscillateur (VCO) commandé en tension est reliée au point de liaison (P) entre la source de courant fixe et la source de courant variable, et que la source de courant fixe (T10) est reliée à la partie (T9) de l'amplificateur différentiel (T8, T9) qui est commandée par le signal de sortie (TA) de l'oscillateur (VCO) commandé en tension, et qui n'est pas utilisée pour la formation de la cascade, à la manière d'un circuit dit à courants en rapport géométrique.

2. Montage selon la revendication 1, caractérisé par le fait qu'à la borne de sortie du discriminateur d'amplitude sont reliées une des bornes d'un huitième et d'un neuvième condensateurs (C8, C9) dont les autres bornes sont reliées entre elles par une inductance (L) et en outre, et séparément, aux bornes des bases d'un sixième et d'un septième transistors npn (T6, T7), que la borne de base du sixième transistor est en outre reliée à un diviseur de tension pour la tension de service négative (– Ub) que les bornes d'émetteurs du sixième et du septième transistors sont reliées entre elles et à la borne de collecteur d'un huitième transistor npn (T8), que la borne d'émetteur du huitième transistor (T8) est reliée à la borne d'émetteur du neuvième transistor npn (T9) et, par l'intermédiaire d'une dixième résistance (R10), à la tension de service négative (– Ub), que la borne de base du huitième transistor (T8) est reliée avec une borne du diviseur de tension pour la tension de service négative et en outre, par l'intermédiaire d'une onzième résistance (R11) dimensionnée pour la commutation symétrique du huitième et du neuvième transistors (T8, T9), à la borne de base du neuvième transistor npn (T9) qui est reliée, par l'intermédiaire d'un septième condensateur (C7), à la borne de sortie de l'oscillateur (VCO) commandé en tension, que la borne de collecteur du neuvième transistor (T9) est reliée, par l'intermédiaire d'un dixième condensateur (C10) et en outre par l'intermédiaire d'un montage série constitué par une diode (D) et par une huitième résistance (R8), à la tension de service positive (+ Ub) et en outre avec la borne de base d'un dixième transistor (T10) du type pnp, que la borne d'émetteur de ce transistor est reliée, par l'intermédiaire d'une neuvième résistance (R9), à la tension de service positive, que la borne de collecteur de ce transistor est reliée au point de liaison (P) avec la borne de collecteur du sixième transistor (T6) et en outre, par l'intermédiaire du montage série d'un onzième condensateur (C11) et d'une quinzième résistance (R15), de même que par l'intermédiaire d'un douzième condensateur (C12), à la masse, que la borne de collecteur du dixième transistor est en outre reliée à l'entrée de commande de l'oscillateur (VCO) commandé en tension, et que la borne de sortie de ce dernier est reliée à la sortie de la cadence.

3. Montage selon la revendication 1, caractérisé par le fait que le discriminateur d'amplitude qui est monté en amont de la boucle de régulation de la phase, pour la récupération du rythme lors de la transmission de signaux ternaires ou pseudo-ternaires, comporte un premier amplificateur différentiel qui est constitué par un premier et par un second transistors npn (T1, T2), dans lequel les bornes d'émetteur des deux transistors sont reliées entre elles, avec la borne de l'émetteur d'un troisième transistor npn (T3) et avec la borne de collecteur d'un quatrième transistor npn (T4), dans lequel les bornes de collecteur des deux premiers transistors (T1, T2) sont reliées à la tension de service (+ Ub), dans lequel les bornes de base des deux premiers transistors sont reliées séparément avec les bornes extérieures de l'enroulement secondaire d'un transformateur (Ü), à prise médiane, dans lequel la borne de la base du troisième transistor (T3) est reliée, par l'intermédiaire d'une première résistance (R1), à la tension de service positive (+ Ub), par l'intermédiaire d'une seconde résistance variable (R2) avec la prise médiane de l'enroulement secondaire et avec l'une des bornes d'un premier condensateur (C1) et d'une troisième résistance (R3), dont les autres bornes sont reliées à la masse, que la borne de base du troisième transistor est en outre reliée, par l'intermédiaire d'un second condensateur (C2) à la masse, que la borne de base du quatrième transistor (T4) est reliée à la borne de collecteur et à la borne de base d'un cinquième transistor (T5) et, par l'intermédiaire d'une quatrième résistance (R4) à la tension de service positive (+ Ub), que la borne d'émetteur du cinquième transistor npn (T5) est reliée par l'intermédiaire d'une cinquième résistance à la masse et la borne de l'émetteur du quatrième transistor (T4) est reliée par l'intermédiaire d'une sixième résistance (R6) à la masse et que la borne de collecteur du troisième transistor (T3) est reliée par l'intermédiaire d'une septième résistance à la tension de service positive (+ Ub) et, en outre, à la borne de sortie du discriminateur d'amplitude.